# EUROPÄISCHE PATENTANMELDUNG

(11) **EP 1 557 399 A2**
(43) Veröffentlichungstag der Anmeldung: **27.07.2005**
(21) Anmeldenummer: 05009396.2
(22) Anmeldetag: 08.08.2002
(51) Int. Cl.: C03B 5/20, C03B 5/185, C03B 5/182

(54) **Verfahren und Vorrichtung zum Herstellen einer Glasschmelze**

(30) Priorität: 20.08.2001 DE 10139887
(62) Teilanmeldung aus: 02017826.5
(71) Anmelder: Schott AG, 55122 Mainz (DE)
(72) Erfinder: Schmitt, Stefan, 55271 Stadecken-Elsheim (DE); Linz, Wilfried, 55124 Mainz (DE); Lautenschläger, Gerhard, Dr., 07743 Jena (DE); Kirchhoff, Rule, Dr., 55299 Nackenheim (DE); Osterhage, Norbert, 55218 Ingelheim (DE); Sprenger, Andreas, 55271 Stadecken-Elsheim (DE); Karetta, Frank, Dr., 67596 Dittelsheim-Hessloch (DE); Eichholz, Rainer, 55126 Mainz (DE); Duch, Klaus-Dieter, Dr., 65232 Taunusstein (DE); Dürsch, Ludwig, 55130 Mainz (DE)
(74) Vertreter: Dr. Weitzel & Partner

(57) **Zusammenfassung**

Die Erfingung betrifft ein Verfahren zum Herstellen einer Glasschmelze aus Gemenge oder Scherben, mit den folgenden Verfahrensschritten:
- es werden Gemenge oder Scherben (2.1) in eine fossil beheizte Schmelzwanne (1) eingetragen und geschmolzen;
- die Schmelze wird durch eine Auslassöffnung (1.1) aus der Schmelzwanne entlassen;
- es werden Maßnahmen getrofen, um die Strömung der Glasschmelze derart durch die Schmelzwanne hindurchzuführen, dass Kurzschlüsse der Glasströmung zwischen der Oberfläche (2.3) des Glasbades einerseits und der Auslassöffnung (1.1) andererseits vermieden, und eine ausreichende Verweildauer aller Schmelzepartikel in der Schmelzwanne erzielt werden;
- dadurch gekennzeichnet, dass die Schmelze im Bereich (5) der Auslassöffnung zusätzlich aufgeheizt oder durch Strömungshindernisse umgelenkt wird.

## Beschreibung

Die Erfindung betrifft ein Verfahren und eine Vorrichtung zum Herstellen einer Glasschmelze. Eine Vorrichtung zum Herstellen einer Glasschmelze ist meist von rechteckigem Grundriss. Sie umfasst eine Wanne mit Umfangswänden sowie mit einem Boden. Die Wanne ist eine fossil beheizte Wanne mit einem Auslass. Sie hat oberhalb des Auslasses eine freie Glasbadoberfläche. Auf das Buchwerk "Glasschmelzöfen" von W. Trier, Springer Verlag Berlin, 1984, wird verwiesen.

Solche Wannen können mit Einbauten versehen sein, beispielsweise mit einem Überströmwall oder einem Brückenwall.

Die Heizung ist eine sogenannte Oberofenheizung, welche Brenner aufweist. Gelegentlich wird auch eine elektrische Zusatzheizung in der Glasschmelze vorgesehen. Eine Seitenwand weist einen Auslass für die Glasschmelze auf.

Auf der Oberfläche von Silicatglasschmelzen (Alkali-Erdalkali-Silicatglasschmelzen, Alkaliborosilicatglasschmelzen, Aluminoborosilicatglasschmelzen, Glaskeramikschmelzen etc.) kommt es in brennstoffbeheizten Schmelzaggregaten zur Ausbildung von SiO₂-reichen, zähen Schichten unterschiedlicher Dicke in Abhängigkeit u.a. von der Glasart, der Oberofentemperatur und dem Durchsatz. Durch die Anreicherung vor allem von SiO₂ und die Abreicherung leicht verdampfbarer anderer Glaskomponenten (z. B. Alkalien oder Borsäure) weisen diese Schichten eine geringere Dichte als das Grundglas auf. Wegen des hohen SiO₂-Anteils haben diese Schichten eine sehr hohe Viskosität und schwimmen relativ ortsfest und unbeweglich auf der Schmelzoberfläche. Die Schichten sind vor allem in Bereichen anzutreffen, wo die Glasoberfläche eigentlich blank sein sollte, d. h. im Bereich der Läuterwanne und vor dem Durchfluss.

Durch das ungewollte Einziehen von Teilen dieser Schicht mit der Entnahmeströmung in den Durchflussbereich wird das zähe Oberflächenglas mit seiner anderen Zusammensetzung in das Grundglas eingebracht. Dieses zähe Glas kann in den nachgeschalteten Konditionierungs- und Homogenisierungsschritten nicht mehr gleichmäßig mit dem Grundglas vermischt bzw. im Grundglas aufgelöst werden. Dadurch bilden sich im Glas Schlieren und Knoten mit der Zusammensetzung des zähen Oberflächenglases, die zur Qualitätsminderung oder zum Produktionsausfall führen.

DE 38 24 829 bezieht sich auf die Verhinderung der Feuerfest-Korrosion und die Vergleichmäßigung von Temperaturunterschieden in einem Schmelzaggregat durch den Einsatz von konzentrisch im Schmelzbecken angeordneten Mo-Rohren. Das Einziehen von Knoten nach dem oben beschriebenen Mechanismus kann mit dieser Anordnung nicht erreicht werden, im Gegenteil: Das sehr weit in Richtung Glasoberfläche geschobene innere Rohr wird das Einziehen der an Glaskomponenten verarmten Oberflächenschicht und damit die Knotenbildung noch begünstigen.

EP 0 275 173 und US 4 029 887 beschreiben induktiv bzw. elektrisch beheizbare Refraktärmetallrohre für die Konditionierung von Glasschmelzen nach dem eigentlichen Schmelz- und Läutervorgang. Wesentliches Element beider Erfindungen ist die Möglichkeit, die Glasschmelze im Rohr zu beheizen. Damit kann ein gewünschtes Temperaturprofil nach dem Verlassen der Läuterwanne eingestellt werden. Hautanwendungsgebiet dieser Erfindungen ist der Einsatz im Feedersystem von Schmelzaggregaten. Nachteil dieser Konstruktion ist die fehlende Sperrwirkung gegenüber knotenhaltigen Strömungen, die von der Oberfläche des Schmelzaggregates direkt in das Rohr gelangen können.

In US 6 044 667 wird die räumliche Lage des Quellpunktes ("hot spot") durch gezielte Anordnung von Heizelementen beeinflusst. Ziel ist es, den besonders heißen Quellpunkt weg von den Seitenwänden und dem Boden des Schmelzaggregates zu verlagern, um die Korrosion zu vermindern und zu vergleichmäßigen. Dadurch wird ein vorauseilender Feuerfest-Verschleiß vermieden. Zur Beeinflussung von Knoten sind die im Patent beschriebenen Konfigurationen ungeeignet.

US 5 785 726 beansprucht eine Methode zur Vermeidung eines speziellen Blasentyps an glasdurchströmten Refraktärmetallrohren, indem an der Außenseite des Rohres ein bestimmter Wasserstoffpartialdruck eingestellt wird. Auf die Knoten hat dies keinen Einfluss. Angaben zu Konstruktionsvarianten für die bautechnische Gestaltung des Durchflussbereiches von Schmelzaggregaten, die das Einziehen von Korrosionsprodukten oder Oberflächenglas in das Rohr verhindern, werden im Patent nicht gemacht.

US 4 365 987 und US 4 352 687 diskutieren Zuführungssysteme für Glasschmelzen. Ziel ist die Durchsatzkontrolle und Temperaturhomogenisierung der Glasschmelze, die durch Beheizung erreicht wird. Ein Zusammenhang mit der Glasqualität in Bezug auf Feuerfest-Korrosionsprodukte oder Knoten aus dem Schmelzaggregat wird nicht hergestellt.

EP 0 173 355 nimmt Bezug auf den Korrosionsschutz von Feuerfest-Material in einem Schmelzaggregat. Dieser wird durch die Verkleidung der Palisadensteine mit Blechen aus einem Refraktärmetall wie zum Beispiel Mo erreicht. Auch dies hat auf die Verdampfungsknoten keinen Einfluss.

US 6 227 007 beansprucht refraktärmetallverkleidete versenkte Durchflüsse. Durch die dargestellte Konstruktion soll das Einziehen von Feuerfest-Korrosionsprodukten verhindert werden. Da sich aber der versenkte Durchfluss nach oben hin öffnet, kann knotenhaltiges Glas auf direktem Weg von der Schmelzoberfläche in den Durchfluss gelangen.

Aus Prospekten verschiedener Hersteller (z. B. "Wanneneinbauten und Zubehörteile", Prospekt Fa. Plansee) sind Wannendurchflüsse aus keramischem Material bekannt, die innen mit Molybdän armiert sind. Nach der relativ schnellen Auflösung des keramischen Materials verhindert die dann freiliegende Mo-Armierung die weitere Korrosion im hochbelasteten Durchflussbereich. Nachteilig ist jedoch bei allen vorgestellten Konstruktionen die mangelnde Sperrwirkung der dargestellten Durchflussausführungen gegenüber absteigenden Strömungen von der Schmelzoberfläche, die Knoten mit sich führen.

Zum Erzielen einer einwandfreien Qualität ist es absolut unerlässlich, dass durch den Auslass völlig geschmolzenes, homogenes und geläutertes (blasenfreies) Glas austritt, und dass nicht noch ungeschmolzenes Gemenge oder Anteile von Glas mit abweichender Zusammensetzung mitgeführt werden. Auch kleine Quanten von fehlerhaftem Glas sind nicht akzeptabel im Hinblick auf die zu erzielende Glasqualität.

Es werden in dieser Richtung alle Anstrengungen unternommen.

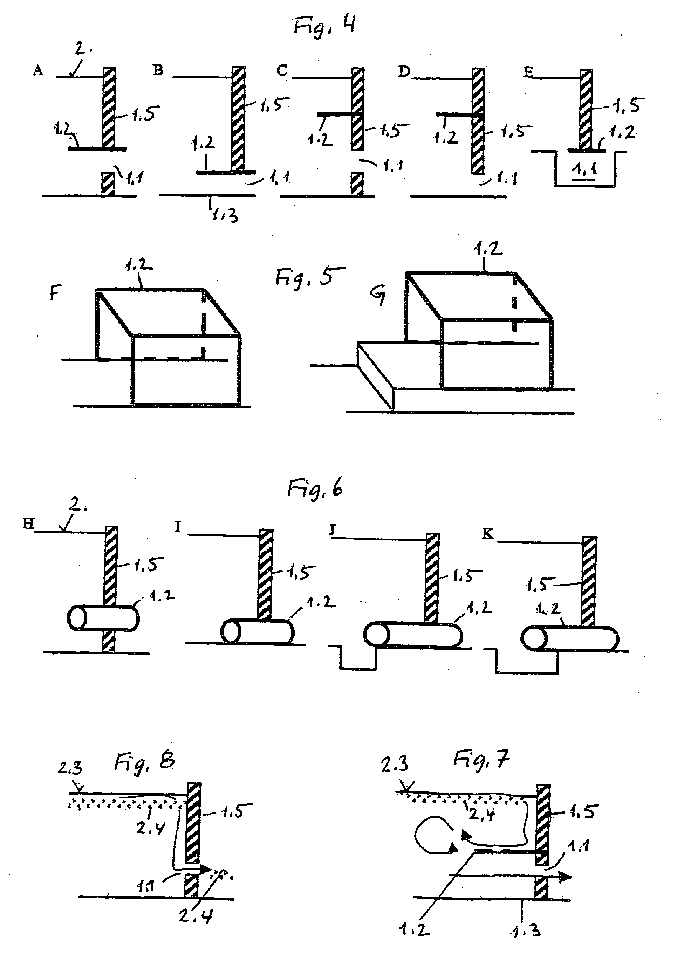

So wurde schon versucht, die Auslasswand besser zu isolieren, so dass der Bereich vor dieser Wand auf höheren Temperaturen gehalten und eine dort vorliegende Abwärtsströmung verringert werden konnte. Eine solche Abwärtsströmung kommt dadurch zustande, dass sich in der Regel zwei Strömungswalzen bilden. Siehe Figur 3. Allerdings führt die erhöhte Temperatur vor der Auslasswand zu einem höheren Verschleiß des Auslasses, und macht dessen Kühlung notwendig.

Bei Wannen mit Einbauten (Wällen) und/oder einer elektrischen Zusatzheizung zur Steigerung der Einschmelzleistung sehen die Strömungswalzen zwar anders aus, als in Figur 3 angedeutet. Die abwärts gerichtete Strömung vor der Durchflusswand tritt in der Regel aber trotzdem auf.

Eine andere Möglichkeit zur Vermeidung des Einziehens von Oberflächenglas in die Durchsatzströmung besteht darin, dass versucht wird, das Oberflächenglas auf Überläufe abzuziehen. Dies hat allerdings den Nachteil, dass ein Teil des erschmolzenen Glases für die Fertigung verlorengeht. Außerdem kann auch dadurch nicht garantiert werden, dass kein Oberflächenglas mehr in die Durchsatzströmung gelangt.

Der Erfindung liegt die Aufgabe zugrunde, ein Verfahren zum Schmelzen von Glas mit einer fossil beheizten Schmelzwanne, bei der die Glasschmelze eine größtenteils blanke Oberfläche aufweist und somit frei von Gemenge ist, derart zu gestalten, dass ein vollständiges Aufschmelzen des Gemenges sowie eine vollständige Läuterung und Homogenisierung des Glases gewährleistet ist, und dass nicht die geringsten Gemengeanteile oder Anteile von Glas mit abweichender Zusammensetzung oder blasenbehaftetes Glas in den Auslass eintreten und zusammen mit dem übrigen Glasstrom in das Produkt gelangen.

Diese Aufgabe wird durch die unabhängigen Ansprüche gelöst.

Die Erfinder haben folgendes erkannt:

Im Bereich der Umfangswand, in der sich auch der Auslass befindet, baut sich eine überwiegend nach unten gerichtete Strömung auf. Durch diese Strömung ist es möglich, dass nicht vollständig aufgeschmolzenes Gemenge oder Glas mit abweichender Zusammensetzung oder nicht vollständig geläutertes Glas direkt in die Entnahmeströmung in den Auslass eintritt und die genannten nachteiligen Folgen hervorruft.

Aufgrund der freien Oberfläche des Glasbades kann es bei bestimmten Glasarten zur Ausbildung einer Oberflächenschicht kommen, die eine andere Zusammensetzung als das Glasbad hat. Dies gilt insbesondere für Borosilicatgläser.

Infolge der ausgeprägten abwärts gerichteten Strömung vor der Auslasswand kommt es immer wieder vor, dass Oberflächenglas von der Durchsatzströmung erfasst wird und so auf sehr kurzem Weg in den Auslass gelangt. Aufgrund des kurzen Weges ist die Zeit für eine Homogenisierung des Glases nicht mehr ausreichend und das eingezogene Oberflächenglas (welches ja eine abweichende Zusammensetzung hat) führt zu Knoten und/oder Schlieren im Produkt und somit zu Ausfall.

Ein vergleichbares Problem liegt vor, wenn sich vor der Auslasswand noch nicht vollständig aufgeschmolzenes Gemenge befindet. Dieses kann ebenfalls von der Durchsatzströmung erfasst werden und somit auf sehr kurzem Weg in den Auslass gelangen. Aufgrund des kurzen Weges ist die Zeit für ein vollständiges Aufschmelzen des Gemenges nicht mehr ausreichend und es kommt zu Fehlern im Produkt in Form von Steinen bzw. Gemengerelikten.

Ein ähnliches Problem liegt vor, wenn sich vor der Auslasswand Schaum bzw. sehr blasenhaltiges Glas befindet. Teile des Schaums bzw. der Blasen können von der Durchsatzströmung erfasst werden und gelangen auf sehr kurzem Weg in den Auslass und führen ebenfalls zu Glasfehlern im Produkt, da die Zeit für einen erneuten Blasenaufstieg nicht ausreicht.

Durch die Erfindung werden somit auch die folgenden Probleme gelöst:

Es wird vermieden, dass Anteile des Gases aus der Oberfläche des Schmelzbades, das unter Umständen in Form einer Schicht mit anderer Zusammensetzung als das übrige Schmelzbad vorliegt, in den Auslass gelangen und somit zu Knoten oder Schlieren im Produkt führen.

Ferner wird ein vollständiges Aufschmelzen des Gemenges gewährleistet; es kommt nicht mehr zu Fehlern im Produkt in Form von Steinen oder von Gemengerelikten.

Schließlich wird das Entstehen von Schaum, Blasen, Knoten oder Schlieren verhindert, dass schaumiges bzw. blasenhaltiges Glas in den Auslass und somit in das Produkt gelangt.

Zur Lösung der Aufgabe schlagen die Erfinder die folgenden Lösungswege vor, die jeweils für sich alleine oder in Kombination angewandt werden können.

Ein erster Lösungsweg besteht in folgendem:

Oberhalb des Auslasses wird eine Abdeckung des darunter liegenden Bereiches vorgesehen, so dass die abwärts gerichtete Strömung vor der Auslasswand umgelenkt wird.

Es wird somit verhindert, dass nicht vollständig aufgeschmolzene Gemengeanteile sowie Glas mit einer abweichenden Zusammensetzung sowie blasenbehaftetes Glas aus dem Bereich oberhalb des Durchlasses direkt in den Auslass gelangen können. Somit lässt sich eine perfekte Glasqualität erzielen, vorausgesetzt, dass alle anderen Parameter in Ordnung sind.

Die genannte Abdeckung kann besonders vorteilhaft sein in Kombination mit einem abgesenkten Auslass bzw. Kanal, der sich unter dem eigentlichen Boden der Wanne befindet.

Als Material für die genannte Abdeckung kommen feuerfeste Materialien (metallisch oder nichtmetallisch) mit geringer Korrosion, hoher Standzeit, niedrigen Kosten und einem niedrigen Glasfehler-Potential in Betracht. Hier bieten sich Refraktärmetalle wie Molybdän oder Wolfram sowie deren Legierungen an.

Ein zweiter Lösungsweg besteht im Anordnen eines Schirmes. Dabei wird der Durchfluss bzw. der Durchflussbereich mit einem Blech, einem Kasten, einem Rohr oder einem ähnlichen Bauteil aus einem hochtemperaturfesten und gegenüber der jeweiligen Glasschmelze inerten Refraktärmetall verkleidet, wobei das Bauteil ausgehend von der Durchflusswand einen bestimmten Betrag in die Schmelze- bzw. Läuterwanne hineinragen muss und den Durchfluss(bereich) damit in Richtung Schmelzoberfläche abgeschirmt. Als besonders vorteilhaft hat sich dafür eine Länge des Refraktärmetallbauteils zwischen 200 und 1000 mm herausgestellt.

Die Dicke des Bauteils richtet sich nach den mechanischen Belastungen und liegt für Molybdän beispielsweise im Bereich von 4 ... 20 mm Wanddicke. Aufgrund der dadurch gegebenen mechanischen Abschirmung ist eine zusätzliche Beheizung des Bauteils nicht erforderlich.

An jeder Durchflusswand entsteht wegen der großen Temperaturdifferenz zwischen kalter Wand und heißem Glasvolumen eine starke absteigende Strömung. Diese führt Bestanteile der Oberflächenschicht mit sich, die direkt mit dieser Strömung sofort und unmittelbar in den Durchfluss gelangen.

Durch die mechanische Sperrwirkung der in die Schmelze hineinragenden Durchflussverkleidung kann die absteigende knotenhaltige Strömung nicht mehr direkt in den Durchfluss gelangen, sondern wird zurück in die Schmelz- bzw. Läuterwanne gezwungen. Bei den hohen Temperaturen der Glasschmelze in der Läuterwanne und der erzwungenen Verweilzeitverlängerung können die eingebrachten Knoten und Schlieren in der Glasmatrix gut aufgelöst werden und beeinträchtigen nicht mehr die Glasqualität. Im einfachsten Fall reicht als Durchflussverkleidung bereits ein Blech aus, das einen bestimmten Betrag in das Schmelzaggregat hineinragt; allerdings sind auch kompliziertere Bauformen denkbar und unter Umständen sinnvoll.

Das Bauteil für die Durchflussverkleidung ist wegen seines allseitigen Glaskontaktes ständig hohen Temperaturen und starken Glasströmungen ausgesetzt. Ein keramisches Bauteil ist für diese Aufgabe ungeeignet, da jedes keramische Feuerfest-Material wegen des an dieser Stelle des Schmelzaggregates besonders intensiven Korrosionsangriffs der Glasschmelze bereits nach kurzer Zeit versagt bzw. durch seine allmähliche Auflösung seinerseits zu Schlieren und Steinchen im Glas führt, die in den nachgeschalteten Konditionierungs- und Homogenisierungsschritten genauso wie die Knoten nicht mehr aufgelöst können. Deshalb muss ein gegenüber der jeweiligen Glasschmelze inertes Refraktärmetall ausgewählt werden. Das Metall darf sich also in der Glasschmelze nicht auflösen, mit der Glasschmelze reagieren oder Metallteilchen oder Metallschlieren absondern. Als Refraktärmetall kommen vorzugsweise Mo oder W, aber auch Pt, Ir, Pd, Au, Ta und/oder Legierungen davon in Betracht.

Bei Bedarf kann die Durchflussverkleidung mit einer Vertiefung (Sumpf) vor dem Durchfluss kombiniert werden, um in diesem Sumpf Feuerfest-Korrosionsprodukte zu sammeln oder über dort vorhandene Bodenabläufe abzuziehen. Dadurch gelangen diese nicht mit der Entnahmeströmung in den Durchfluss und ins Produkt.

In einer anderen Ausführung kann das Refraktärmetallbauteil einen bestimmten Betrag oberhalb des Wannenbodens angeordnet werden, um den gleichen Effekt zu erzielen. Besonders vorteilhaft ist eine Höhe zwischen 50 und 250 mm über dem Wannenboden. Um Rückströmungen zu verhindern, kann zum Beispiel ein versenkter Durchfluss mit dem Refraktärmetallbauteil kombiniert werden, um die Vorteile beider Systeme auszunutzen.

Bereits ein Mo-Rohr, das einen halben Meter in die Läuterwanne hineinragt, reicht aus, um eine wesentliche Verbesserung der Glasqualität in Bezug auf Knoten und Schlieren zu erzielen. Die absteigende Strömung an der im Vergleich zur Glasschmelze deutlich kälteren Durchflusswand wird erneut in die Läuterwanne gezwungen. Das direkte Einziehen von Knoten aus der Oberfläche in den Durchfluss wird dadurch unterbunden; die stets kältere Durchflusswand spielt in Bezug auf die Durchflussströmung keine negative Rolle mehr. Die erheblich längere Verweilzeit in der Läuterwanne ermöglicht gleichzeitig eine bessere Auflösung von trotzdem eingezogenen Knoten aus der Oberfläche.

Ein weiterer Vorteil der Erfindung ist, dass der Glasverlust, der beim Abziehen der Oberflächenschicht über Überläufe entsteht, vermieden wird. Außerdem unterbleibt die sonst übliche Korrosion, die keramische Durchflüsse durch die Glasschmelze im Laufe der Zeit erfahren, durch die Verwendung eines gegenüber der jeweiligen Glasschmelze inerten Refraktärmetalls völlig.

Ein dritter Lösungsweg besteht in folgendem:

Im Bereich des Abzugskanals wird eine Zusatzheizung vorgesehen, und zwar vorzugsweise im Bereich oberhalb des Auslasses, dort wo der Glasstrom die Wanne verlässt. Die Wirkung dieser Zusatzheizung besteht im Aufbau einer thermischen Barriere, durch die die abwärts gerichtete Strömung vermindert oder vollständig unterbunden wird. Somit wird verhindert, dass nicht vollständig aufgeschmolzenes Gemenge oder Glas mit einer abweichenden Zusammensetzung, oder nicht vollständig geläutertes Glas direkt in den Auslass gelangen kann.

In jedem Falle befindet sich im Bereich des Oberofenraumes ein fossil beheiztes Gewölbe, das Brenner aufweist. Es stellt sich eine größtenteils blanke Glasoberfläche ein, durch die Energie aus dem beheizten Gewölbe in das Glasbad eintritt.

Die Erfindung sowie der Stand der Technik sind anhand der Zeichnung näher erläutert. Darin ist im Einzelnen folgendes dargestellt:
- Figur 1: zeigt in einer schematischen Aufrissansicht eine Schmelzwanne gemäß einer ersten Ausführungsform der Erfindung.
- Figur 2: zeigt in einer schematischen Aufrissansicht eine Schmelzwanne gemäß einer zweiten Ausführungsform der Erfindung.
- Figur 3: zeigt in einer schematischen Aufrissansicht eine Schmelzwanne gemäß dem Stande der Technik.
- Fig. 4A bis 4E: veranschaulichen verschiedene Konfigurationen eines Refraktär-Metallbauteiles.
- Fig. 5F und 5G: veranschaulichen ein kastenförmiges Refraktär-Metallbauteil.
- Fig.6H bis 6K: veranschaulichen ein rohrförmiges Refraktär-Metallbauteil.
- Figur 7: zeigt die Wirkung eines Refraktärbauteiles auf die Strömung der Schmelze.
- Figur 8: zeigt eine konventionelle Durchflusskonstruktion.

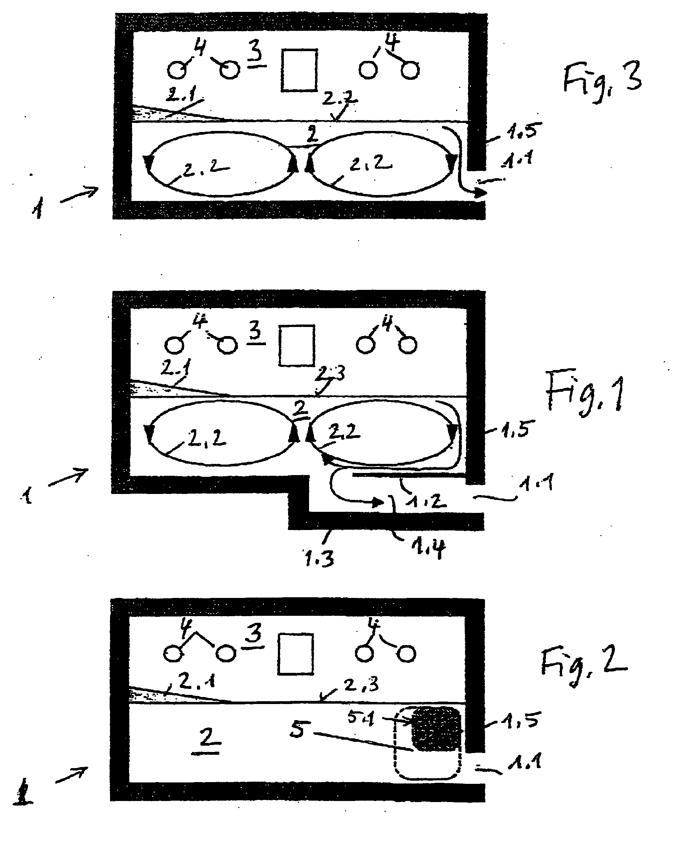

Die in den Figuren 1 und 2 dargestellte, erfindungsgemäße Vorrichtung weist eine Schmelzwanne 1 auf. Die Schmelzwanne enthält ein Schmelzbad 2. Dieses wird gespeist von Gemenge 2.1, das an einer bestimmten Stelle der Schmelzwanne 1 zugeführt wird. Oberhalb der Schmelzwanne 2 befindet sich der Oberofenraum 3. Dieser enthält hier schematisch dargestellte Brenner 4, durch welche auf das Schmelzbad 2 Wärme übertragen wird.

Diametral dem eintretenden Gemenge 2.1 gegenüberliegend weist die Schmelzwanne 1 eine Auslassöffnung 1.1 auf.

Bei der Ausführungsform gemäß Figur 1 ist ein abgesenkter Auslass mit Kanal 1.4 sowie eine Abdeckplatte 1.2 vorgesehen.

Wie man ferner erkennt, bilden sich im Schmelzbad walzenförmige Strömungsmuster 2.2 aus. Durch die Abdeckplatte 1.2 oberhalb des Auslasskanales 1.4 und vor der Auslassöffnung 1.1 wird ein direkter Durchfluss von der Oberfläche des Glasbades zur Auslassöffnung 1.1 verhindert. Es wird somit durch die Abdeckplatte 1.2 verhindert, dass durch die abwärts gerichtete Strömung vor der Auslaßwand 1.5 eingezogenes Oberflächenglas innerhalb kurzer Zeit zur Auslassöffnung 1.1 gelangt. Das Glas muss den "Umweg" nehmen, der durch die Abdeckplatte 1.2 erzwungen wird. Hierdurch steht mehr Zeit für die Homogenisierung bzw. Knoten- und/oder Schlierenauflösung zur Verfügung. Darüber hinaus wird bei richtiger Dimensionierung der Abdeckplatte 1.2 ein Teil des Glases wieder von der Strömungswalze erfasst, was zu einer weiteren Verlängerung der Aufenthaltszeit in der Wanne 1 und somit zu einer verbesserten Homogenisierung sowie Knoten- und/oder Schlierenauflösung führt.

Bei der Ausführungsform gemäß Figur 2 ist eine Zusatzheizung vorgesehen. Diese erstreckt sich über einen Bereich 5 - gestrichelt angedeutet, bzw. vorzugsweise im schraffierten Bereich 5.1.

Diese (elektrische) Zusatzheizung vor der Auslassöffnung 1.1 bewirkt eine lokale Erwärmung der Schmelze in diesem Bereich. Hierdurch wird eine thermische Barriere aufgebaut, die eine abwärts gerichtete Strömung behindert. Sie verringert die Geschwindigkeit der abwärts gerichteten Strömung oder unterbindet eine solche Strömung voll und ganz.

Durch eine solche Strömungsbeeinflussung lässt sich zum einen erreichen, dass aufgrund der geringeren Geschwindigkeit der abwärts gerichteten Strömung weniger Oberflächenglas eingezogen wird. Zum anderen wird die Zeitspanne verlängert, die eingezogenes Oberflächenglas benötigt, um bis zur Auslassöffnung 1.1 zu gelangen. Damit steht mehr Zeit für die Homogenisierung und Knoten- und/oder Schlierenauflösung zur Verfügung.

Die Heizstrecke der elektrischen Zusatzheizung lässt sich mit Stab-, Platten-, Block- oder Kalotten-Elektroden verwirklichen. Diese können als Seitenelektroden eingesetzt werden (links, rechts oder in der Auslasswand 1.5), aber auch als Top-Elektroden oder als Boden-Elektroden.

Es ist vorteilhaft, die Heizstrecke so aufzubauen, dass sich die eingebrachte Heizleistung vor der Auslassöffnung 1.1 konzentriert. Die Heizleistung sollte sich nicht über weite Bereiche des Glasbades 2 verteilen. Dies lässt sich beispielsweise dadurch erreichen, dass die Heizstrecke quer zur Glasschlussrichtung angebracht wird. Dabei ist die Heizstrecke im äußersten Falle doppelt so breit wie die Auslassöffnung 1.1.

Weiterhin ist es vorteilhaft, die Heizstrecke derart zu gestalten, dass die eingebrachte Heizleistung vor allem oberhalb der Auslassöffnung 1.1 freigesetzt wird. Dies lässt sich z. B. mit Seiten- oder Top-Elektroden verwirklichen, die auf entsprechender Höhe angeordnet sind.

Die Ausführungsform gemäß Figur 3 gehört dem Stande der Technik an. Man erkennt wieder die Strömungswalzen 2.2. Den Strömungswalzen ist außerdem noch die Durchsatzströmung durch die Wanne 1 hindurch überlagert. Aufgrund der Strömungswalzen und der überlagerten Durchsatzströmung existiert vor der Auslasswand 1.5 eine ausgeprägte abwärts gerichtete Strömung.

Hieran ändern auch Einbauten wie Wälle und/oder eine elektrische Zusatzheizung zur Steigerung der Einschmelzleistung nichts Grundsätzliches. Die Strömungswalzen sehen zwar anders aus als in Figur 3 gezeigt. Die abwärts gerichtete Strömung vor der Auslaßwand 1.5 tritt aber trotzdem auf.

Figur 4 zeigt fünf Varianten einer möglichen Ausführungsform und Anordnung eines Schirmes 1.2, der dazu dient, einen direkten Durchfluss von Schmelze von der Glasbadoberfläche 2.3 zur Auslassöffnung 1.1 hin zu verhindern. Siehe die Varianten A bis E.

Schirm 1.2 besteht aus einem Refraktärmetall. Er besteht aus einem Blech 1.2, das sich bei den gezeigten Varianten in unterschiedlichen geodätischen Höhen befindet. Bei der Variante gemäß Figur 4A erstreckt sich das Blech durch die Auslassöffnung 1.1 hindurch. Es steht somit beidseits der Auslasswand 1.5 der Schmelzwanne über. Dies bedeutet, dass es in die Schmelze hineinragt. Es liegt an der Leibung der Auslassöffnung 1.2 unmittelbar an.

Eine ähnliche Situation liegt bei Figur 4B vor. Hier befindet sich die Auslassöffnung 1.1 jedoch weiter unten, unmittelbar über dem Boden 1.3 der Schmelzwanne.

Bei den Ausführungsformen gemäß der Figuren 4C und 4D ist das Blech in die Auslasswand 1.5 eingesetzt. Es ragt wiederum in die Schmelze hinein.

Bei der Ausführungsform gemäß Figur 4E ist ein versenkter Durchfluss vorgesehen.

Die Figuren 5F und 5G veranschaulichen besondere Ausführungsformen eines Schirmes als Mittel zum Verhindern eines direkten Durchflusses von Schmelze von der Glasbadoberfläche zur Auslassöffnung. Der Schirm besteht wiederum aus einem Refraktärmetall.

Bei den Ausführungsformen gemäß der Figuren 6H bis K hat der perspektivisch dargestellte Schirm 1.2 die Gestalt eines Rohrstutzens. Er ist dabei durch die Auslassöffnung hindurchgesteckt. Er ragt beidseits über die Auslasswand 1.5 hinaus, somit auf der schmelzeberührten Seite als auch auf der Außenseite. Der Rohrstutzen liegt an der Leibung der Auslassöffnung an und verkleidet diese somit.

Bei den Figuren 6J und 6K ist wiederum der Durchfluss versenkt, wie man sieht.

Die Figuren 7 und 8 sollen die unterschiedlichen Wirkungen der Erfindung einerseits und des Standes der Technik andererseits veranschaulichen.

Bei der Ausführungsform gemäß Figur 7 erkennt man wiederum die Glasbadoberfläche (Spiegel) 2.3. Vor der Auslasswand bildet sich eine absteigende Strömung. Der Schmelzestrom mit den darin enthaltenen Knoten ist somit zunächst nach unten gerichtet. Am erfindungsgemäßen Refraktär-Metallbauteil 1.2 wird er umgelenkt ins Innere des Schmelzbades. Auf diesem Wege werden die Knoten 2.4 aufgelöst. Die Homogenisierung wird verbessert.

Anders sieht es aus bei der Ausführungsform einer konventionell aufgebauten Schmelzwanne gemäß Figur 8. Dort strömt Schmelze direkt von der Glasbadoberfläche 2.3 zur Auslassöffnung 1.1. Die an der Glasbadoberfläche vorhandenen Knoten 2.4 gelangen durch die Auslassöffnung 1.1 hindurch.

## Patentansprüche

1. Verfahren zum Herstellen einer Glasschmelze aus Gemenge oder Scherben, mit den folgenden Verfahrensschritten:
1.1 es werden Gemenge oder Scherben in eine fossil beheizte Schmelzwanne eingetragen und geschmolzen;
1.2 die Schmelze wird durch eine Auslaßöffnung (1.1) aus der Schmelzwanne entlassen;
1.3 es werden Maßnahmen getroffen, um die Strömung der Glasschmelze derart durch die Schmelzwanne hindurchzuführen, daß Kurzschlüsse der Glasströmung zwischen der Oberfläche des Glasbades einerseits und der Auslaßöffnung (1.1) andererseits vermieden, und eine ausreichende Verweildauer aller Schmelzepartikel in der Schmelzwanne erzielt werden.

2. Verfahren nach Anspruch 1, **dadurch gekennzeichnet, daß** die Strömung vor der Auslaßöffnung (1.1) umgelenkt wird.

3. Verfahren nach Anspruch 1 oder 2, **dadurch gekennzeichnet, daß** die Schmelze im Bereich der Auslaßöffnung (1.1) zusätzlich aufgeheizt wird.

4. Vorrichtung zum Herstellen einer Glasschmelze aus Gemenge oder Scherben;
4.1 mit einer fossil beheizten Schmelzwanne (1), die Umfangswände und einen Boden (1.3) aufweist;
4.2 mit einem Aufgabebereich für das zu schmelzende Gut;
4.3 mit einer Auslaßöffnung (1.1); **gekennzeichnet durch** die folgenden Merkmale:
4.4 es sind Mittel (1.2) vorgesehen, um einen direkten Auslaß von Schmelze von der Glasbadoberfläche zur Auslaßöffnung (1.1) zu verhindern.

5. Vorrichtung nach Anspruch 4, **dadurch gekennzeichnet, daß** im Bereich der Auslaßöffnung (1.1) Strömungshindernisse (1.2) angeordnet sind, die eine Umlenkung der nach unten gerichteten Schmelzeströmung in eine von der Auslaßöffnung (1.1) abgewandte Richtung erzwingen.

6. Vorrichtung nach einem der Ansprüche 4 oder 5, **dadurch gekennzeichnet, daß** oberhalb der Auslaßöffnung (1.1) eine Abdeckplatte (1.2) angeordnet ist, die eine Umlenkung der nach unten gerichteten Schmelzeströmung in eine von der Auslaßöffnung abgewandte Richtung erzwingt.

7. Vorrichtung nach einem der Ansprüche 4 bis 6, **dadurch gekennzeichnet, dass** die Mittel (1.2) zum Verhindern eines direkten Durchflusses aus einem Schirm besteht, der die Auslassöffnung (1.1) abschirmt, aus einem Refraktärmetall besteht und der von der Auslasswand (1.5) in das Schmelzbad hineinragt.

8. Vorrichtung nach Anspruch 7, **dadurch gekennzeichnet, dass** der Schirm aus einem Blech aus Refraktärmetall besteht und oberhalb der Auslassöffnung (1.1) angeordnet ist.

9. Vorrichtung nach Anspruch 7, **dadurch gekennzeichnet, dass** der Schirm aus einem Rohrstutzen besteht.

10. Vorrichtung nach Anspruch 9, **dadurch gekennzeichnet, dass** der Rohrstutzen in die Leibung der Auslassöffnung (1.1) eingesetzt ist und diese auskleidet.

11. Vorrichtung nach einem der Ansprüche 4 bis 10, **dadurch gekennzeichnet, dass** unterhalb des Mittels (1.2) zum Verhindern eines direkten Durchflusses ein Kanal (1.4) vorgesehen ist, der gegenüber dem übrigen Boden (1.3) der Schmelzwanne (1) abgesenkt ist.

12. Vorrichtung nach einem der Ansprüche 4 bis 11, **dadurch gekennzeichnet, dass** im Bereich der Auslassöffnung (1.1) eine Zusatzheizung vorgesehen ist, die eine Umlenkung der nach unten gerichteten Schmelzeströmung in eine von der Auslassöffnung (1.1) abgewandte Richtung erzwingt.

13. Vorrichtung nach Anspruch 12, **dadurch gekennzeichnet, dass** die Zusatzheizung Stabelektroden oder Plattenelektroden oder Blockelektroden oder Kalottenelektroden umfasst.

14. Vorrichtung nach Anspruch 12 oder 13, **dadurch gekennzeichnet, dass** Seitenelektroden oder Bodenelektroden oder Top-Elektroden vorgesehen sind.
